# FASCICULE DE BREVET EUROPEEN

(11) **EP 0 964 268 B1**
(45) Date de publication et mention de la délivrance du brevet: **09.04.2008**
(21) Numéro de dépôt: 99401314.2
(22) Date de dépôt: 01.06.1999
(51) Int. Cl.: G01S 13/42, H01Q 3/26

(54) **Procédé d'augmentation de la couverture angulaire de radars à formation de faisceaux, et radar le mettant en oeuvre**
Verfahren zur Erhöhung des Winkelerfassungsbereichs für einen Strahlformungsradar, und Radar dafür
Method for increasing the angular coverage of a beam-forming radar, and radar therefor

(30) Priorité: 12.06.1998 FR 9807440
(43) Date de publication de la demande: 15.12.1999
(73) Titulaire: Thales, 75008 Paris (FR)
(72) Inventeur: Clerc, Françoise, THOMSON-CSF, 94117 Arcueil Cedex (FR); Desodt, Guy, THOMSON-CSF, 94117 Arcueil Cedex (FR); Muller, Daniel, THOMSON-CSF, 94117 Arcueil Cedex (FR)
(74) Mandataire: Chaverneff, Vladimir

(56) Documents cités:
- US-A- 4 654 665
- US-A- 5 537 367

## Description

La présente invention se rapporte à un procédé d'augmentation de la couverture angulaire de radars à formation de faisceaux, et à un radar le mettant en oeuvre.

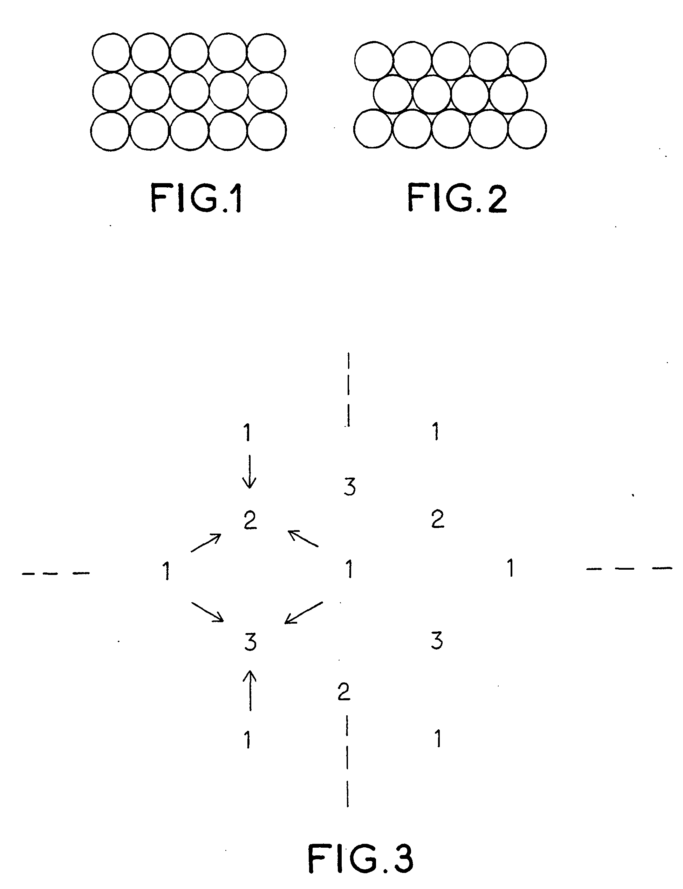

On peut être amené à rechercher pour les radars, en particulier en fonction « veille », une couverture angulaire importante, afin de surveiller un espace étendu. Pour remplir cette fonction de veille volumétrique, les radars à formation de faisceaux exploitent les signaux issus de faisceaux formés dans un angle solide donné pour des traitements comprenant: la post-intégration de plusieurs rafales d'émission, la régulation de fausses alarmes, la détection de cibles, ... Pour pouvoir couvrir cet angle solide de surveillance, on l'échantillonne, c'est-à-dire que l'on forme suffisamment de faisceaux adjacents (couvrant chacun une petite partie de l'angle solide) pour que leur ensemble remplisse cet angle solide. C'est la méthode dite du maillage. On a représenté en figures 1 et 2 les deux configurations les plus courantes de maillage, respectivement dénommées « maillage rectangulaire» et maillage triangulaire. Sur ces figures, les cercles représentent, en coupe transversale, l'extension angulaire des faisceaux formés, leurs diamètres correspondant à la largeur des diagrammes de rayonnement en leurs points de croisement. Cette largeur n'est pas nécessairement celle à -3dB ; elle peut par exemple être déterminée à -2dB. La distance entre les centres des cercles proches représente le pas du maillage. Le choix de la configuration du maillage et du degré de recouvrement des faisceaux est déterminé par la valeur souhaitée de la probabilité de détection d'une cible.

Quelle que soit la configuration de maillage retenue, lorsque le volume de veille est grand par rapport à l'angle solide englobant l'ensemble des faisceaux formés (par exemple au moins cinq fois), le nombre de faisceaux nécessaires pour couvrir ce volume de veille peut être très élevé (plusieurs milliers par exemple), et par ailleurs, la charge et/ou le temps de calcul, en particulier pour former les faisceaux de réception, peuvent être prohibitifs. Il faut alors, pour couvrir tout le volume de veille, soit diminuer le nombre de faisceaux formés en augmentant le pas d'échantillonnage, soit diviser le volume à couvrir en plusieurs secteurs traités successivement dans le temps. Dans ces deux cas, les performances du système de détection sont fortement dégradées.
Le document de brevet Américain US 5,537,367 délivré le 16 juillet 1996, décrit de nouvelles structures d'antennes lacunaires, comportant des lacunes périodiques, permettant d'obtenir des performances comparables à l'antenne non lacunaire équivalente.
Dans l'ouvrage intitulé "Phased Array Antennas", publiée en 1998 aux éditions John Willey & Sons, l'auteur, Robert C. Hansen, décrit au paragraphe 10.3.2 comment modifier la phase relative de deux faisceau se chevauchant de façon à obtenir un chevauchement permettant d'augmenter la précision de la mesure angulaire réalisée à partir de ces deux faisceaux.

La présente invention a pour objet un procédé d'augmentation de la couverture angulaire de radars à formation de faisceaux, caractérisé en ce qu'il consiste, à partir d'un maillage de faisceaux formés à pas grossier couvrant tout l'espace désiré, à interpoler les faisceaux manquants pour obtenir un maillage à pas suffisamment fin en fonction de la probabilité de détection de cibles souhaitée, l'interpolation étant opérée sur des nombres complexes représentatifs des paramètres des faisceaux.

La présente invention a également pour objet un radar à formation de faisceaux à très grande couverture angulaire, en particulier en fonction de veille, dont le prix de revient ne soit pratiquement pas plus élevé que celui d'un modèle similaire à faible couverture angulaire, et qui puisse même être réalisé à partir d'un modèle existant, sans modifications de sa partie mécanique, et avec peu de modifications de sa partie électronique.

L'invention a encore pour objet l'utilisation du procédé selon l'invention dans un radar à formation de faisceaux par le calcul comportant plusieurs voies de réception, l'interpolation des faisceaux formés étant réalisée après la formation des faisceaux par le calcul, et avant la post-intégration et la détection.

L'invention a encore pour objet l'utilisation du procédé selon l'invention, dans un radar à balayage électronique comportant une antenne réseau, un dispositif de traitement des signaux reçus et une mémoire, l'interpolation de signaux complexes étant réalisée sur les signaux en aval de la mémoire.

L'invention a encore pour objet l'utilisation du procédé selon l'invention dans un radar à structure focalisée comportant une rétine de capteurs coopérant avec un réflecteur et suivie d'un dispositif combinatoire et d'une mémoire, l'interpolation de signaux complexes étant réalisée sur les signaux en aval de la mémoire.
Ce procédé permet avantageusement d'augmenter la couverture angulaire d'un radar à formation de faisceaux, pour obtenir de bonnes performances de détection (pratiquement du même ordre de grandeur que dans le cas d'une faible couverture angulaire) sans pour autant augmenter la puissance de calcul et/ou le temps de calcul pour la formation des faisceaux et le traitement aval.

La présente invention sera mieux comprise à la lecture de la description détaillée de plusieurs modes de mise en oeuvre, pris à titre d'exemples non limitatifs et illustrés par le dessin annexé, sur lequel :
- les figures 1 et 2, déjà décrites ci-dessus, sont des vues schématisées partielles de deux configurations courantes de maillage de faisceaux de radars,
- la figure 3 est un schéma simplifié permettant d'expliquer le procédé de l'invention,
- les figures 4 et 5 sont des diagrammes de lobes de rayonnement montrant les avantages de l'invention, et
- les figures 6 à 8 sont des blocs-diagrammes de différents types de radars mettant en oeuvre l'invention.

L'invention est décrite ci-dessous en référence à la fonction de veille d'un radar, mais il est bien entendu qu'elle n'est pas limitée à cette seule application, et qu'elle peut aussi bien être mise en oeuvre pour d'autres fonctions, telle la poursuite de cibles, et ce, quel que soit le type de radar à formation de faisceaux: à formation de faisceaux par le calcul, à balayage électronique, à structure focalisée, ...

Le procédé de l'invention consiste tout d'abord à définir le nombre N et les positions angulaires des faisceaux nécessaires pour atteindre d'emblée, pour la totalité de l'ongle solide de l'espace à surveiller, les objectifs de performance de détection visés. Ces N positions angulaires constituent le maillage global Mo. Ensuite, on forme, par interpolation, à chaque nouvelle rafale d'un séquencement, des faisceaux issus des mêmes positions angulaires qu'à la rafale précédente. Ainsi, les traitements effectués en aval (par exemple une intégration, s'appliquent sur des signaux de même provenance angulaire.

A cet effet, les signaux traités à chaque rafale, et pour chacune des N positions d'échantillonnage du maillage global Mo sont soit issus des faisceaux effectivement formés dans les N/p positions angulaires de maillages « partiels » Mi (avec i = 1...p), soit interpolés à partir des signaux des positions voisines (effectivement formées).

Ainsi, lors de la production d'une rafale, les positions des faisceaux effectivement formés sont un sous-ensemble (appelé par la suite « vibration ») judicieusement choisi du maillage global (choisi de la manière exposée ci-dessous). Les faisceaux complémentaires (nécessaires pour définir la totalité du maillage global) sont calculés par interpolation à partir des faisceaux effectivement formés.

Lors de la production des rafales suivantes, les faisceaux effectivement formés occupent d'autres positions du maillage global. Le nombre de faisceaux formés à chaque rafale peut être constant, de même que le nombre de faisceaux interpolés. Toutefois, selon une variante de l'invention, ces nombres peuvent varier d'une rafale à la suivante ou bien après un certain nombre de rafales ou en fonction d'événements extérieurs, par exemple par suite d'apparition d'une éventuelle cible, afin d'augmenter la résolution dans la zone où s'est produite cette apparition. L'enchaînement des rafales successives, qui sont utilisées pour les traitements radar, en aval de l'interpolation, constitue un motif. On peut avantageusement associer le procédé de l'invention à un traitement de post-intégration sur plusieurs rafales. Bien entendu, au lieu d'augmenter la couverture angulaire, ou en plus de cette augmentation, on peut améliorer la finesse du maillage existant, afin d'améliorer les performances de détection du radar.

Le procédé de l'invention sera maintenant explicité en référence à la figure 3. Ce procédé consiste, pour chacune des p « vibrations » à ne former effectivement que N/p faisceaux du maillage global, puis à interpoler chacun des (N- N/p) faisceaux manquants à l'aide des faisceaux voisins. On a illustré en figure 3 le cas où p = 3, avec un maillage triangulaire. On a attribué la référence numérique 1 aux faisceaux de la « vibration » 1, qui correspond aux faisceaux effectivement formés. Les références numériques 2 et 3 correspondent aux « vibrations » dont les faisceaux sont interpolés. Bien entendu, p peut avoir d'autres valeurs. Comme représenté sur la figure 3, les faisceaux 1 forment un maillage « triangulaire », dont les éléments de base (mailles) sont des triangles sensiblement équilatéraux (dont les sommets sont les centres des trois faisceaux voisins, deux des faisceaux étant situés sur une ligne, le troisième sur la ligne voisine). En considérant les triangles successifs déterminés entre les deux mêmes lignes, les faisceaux interpolés sont alternativement référencés 2 et 3, et leurs centres sont situés par exemple au centre des triangles respectifs. Il en résulte que les centres des faisceaux interpolés sont alignés sur les colonnes du maillage 1, dans l'ordre : 1, 2, 3,1, ...

L'interpolation est opérée sur les nombres complexes représentatifs des paramètres des faisceaux (cases distance, filtre Doppler, rafale...) et peut se faire de différentes façons connues en soi. Pour ce qui est de l'interpolation à partir des faisceaux se trouvant sur les bords du maillage, et ne constituant pas une maille complète, on peut, par exemple, leur adjoindre des faisceaux fictifs pour compléter ces mailles, et appliquer le même procédé d'interpolation qu'aux mailles complètes, ou bien modifier le calcul d'interpolation en fonction du nombre de faisceaux des mailles incomplètes.

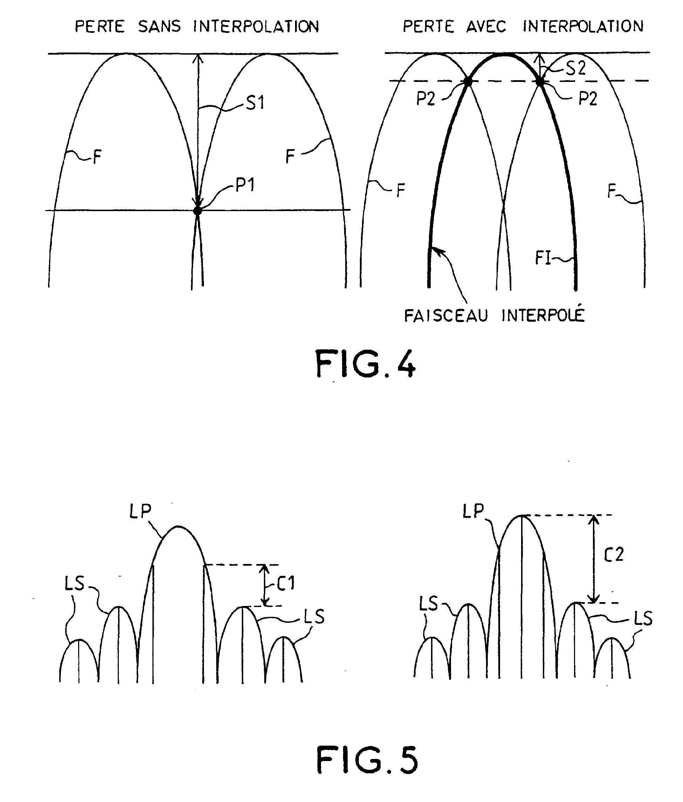

On va exposer, en référence aux figures 4 et 5 les avantages du procédé de l'invention en termes de charge de calcul de la fonction veille et de performances de détection de cible.

On prend en exemple un radar à formation de faisceaux par le calcul. Ce radar dispose de K capteurs (correspondant à K faisceaux effectivement formés), alors que N faisceaux (N>>K) sont nécessaires pour assurer la couverture angulaire recherchée, avec des performances de détection de cible déterminées. Le procédé de l'art antérieur nécessiterait 4.K.N opérations à chaque rafale. Par contre, le procédé de l'invention ne nécessite que 4.K. N/p opérations pour former les faisceaux et 4.p.N opérations d'interpolation, soit au total : 4.N (K/p + p) opérations. Le gain en charge de calcul est donc égal à (K/p + p)/K. Si, par exemple, K = 16 et p = 3, le gain en charge de calcul est presque égal à 2.

On a illustré en figure 4 l'augmentation des performances de détection de cible pour un nombre donné de faisceaux effectivement formés. Le diagramme de gauche de la figure 4 se rapporte à un radar sans interpolation de faisceaux. On voit qu'au point P de croisement des faisceaux effectivement formés, la perte de sensibilité de détection S1 est importante. Par contre, grâce à l'interpolation (faisceau interpolé FI sur le diagramme de droite de la figure 4), les points de croisement P2 du faisceau FI avec les faisceaux voisins F correspondent à une perte de sensibilité S2 beaucoup moins importante que S1.

En outre, comme illustré en figure 5, le procédé de l'invention permet d'augmenter le contraste entre le lobe principal d'une antenne et ses lobes secondaires, à nombre égal de faisceaux effectivement formés. Sur les deux diagrammes de cette figure, on a représenté le lobe principal LP et les quatre lobes secondaires LS d'une antenne radar, ainsi que les raies d'échantillonnage. On a noté C1 et C2 les contrastes minimaux existant entre l'amplitude maximale mesurée du lobe LP et l'amplitude la plus élevée mesurée dans un des faisceaux qui n'appartiennent pas au voisinage angulaire de LP, c'est-à-dire dans les lobes secondaires, et ce, respectivement dans le cas de l'art antérieur (diagramme de gauche) et dans le cas du procédé de l'invention (diagramme de droite).

Ces contrastes sont déterminés entre des points d'échantillonnage des lobes. On constate ainsi que l'interpolation du procédé de l'invention permet, grâce à un pas d'échantillonnage réduit, d'augmenter le contraste minimum (C2 > C1). On améliore également le contraste moyen, c'est-à-dire l'écart entre le lobe principal et le niveau moyen des lobes secondaires.

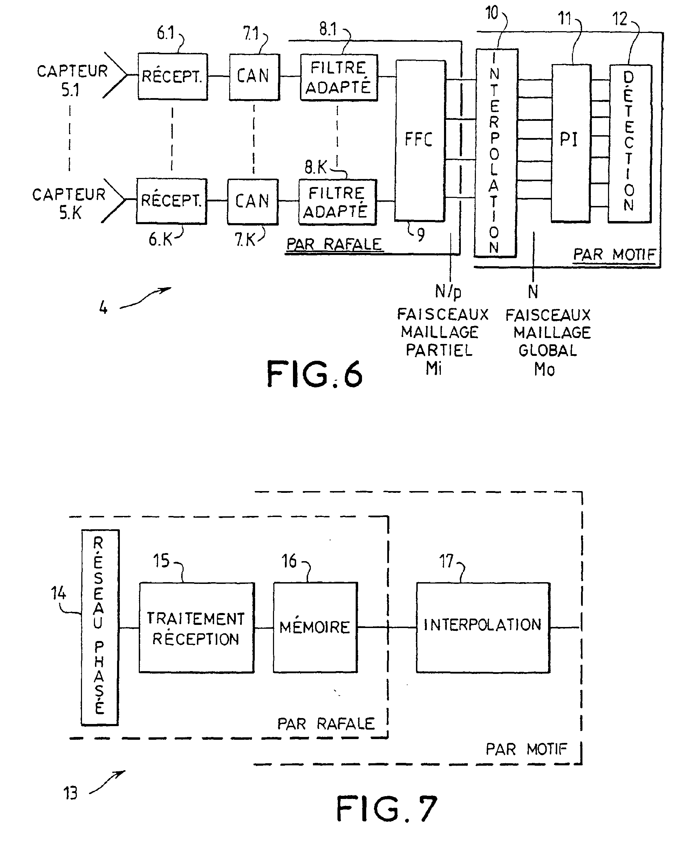

On a représenté en figure 6 le bloc-diagramme du récepteur 4 d'un radar à formation de faisceaux par le calcul. Ce récepteur comporte une antenne-réseau, éventuellement lacunaire, à K capteurs, référencés 5.1 à 5.K (qui sont généralement tous identiques). Chacun de ces capteurs est suivi d'un circuit de réception (6.1 à 6.K respectivement), d'un convertisseur analogique-numérique (7.1 à 7.K respectivement) et d'un filtre adapté (8.1 à 8.K respectivement). Tous les filtres 8.1 à 8.K. sont reliés à un unique dispositif 9 de formation de faisceaux par le calcul. Les éléments décrits ci-dessus , des capteurs au dispositif 9, sont ceux adressés à chaque rafale. A la sortie du dispositif 9, on obtient les N/p faisceaux d'un maillage partiel Mi (faisceaux effectivement formés).

Le dispositif 9 est suivi d'un dispositif 10 d'interpolation (mettant en oeuvre l'interpolation telle que décrite ci-dessus), à la sortie duquel on obtient les N faisceaux du maillage global Mo, puis d'un circuit 11 de post-intégration et d'un circuit 12 de détection. Les éléments 10 à 12 sont relatifs à un « motif » (un secteur angulaire de surveillance en veille). De façon avantageuse, la fréquence d'émission du radar peut varier entre deux rafales, de façon à faire « fluctuer » la cible (pour mieux la caractériser). Le procédé de l'invention s'applique avantageusement à la formation adaptative de faisceaux par le calcul, dont il conserve les propriétés d'antibrouillage.

On a représenté en figure 7 le bloc-diagramme de la partie réception 13 d'un radar à balayage électronique. Un tel radar peut également comporter une antenne-réseau. Celle-ci est référencée 14 sur la figure. Chaque capteur élémentaire de cette antenne est commandé analogiquement en phase, et éventuellement en amplitude, afin de participer à la formation de faisceaux successifs d'orientations différentes, assurant ainsi la couverture angulaire requise. Le réseau 14 est suivi d'un circuit 15 de traitement des signaux reçus et d'une mémoire 16 (mémorisant les signaux reçus lors de chaque séquence de balayage complet), et d'un dispositif d'interpolation 17. Les éléments 14 à 16 sont adressés à chaque rafale de balayage complet, alors que le dispositif 17 est relatif à un motif (un secteur de balayage de l'antenne). La mémoire 16 stocke les signaux complexes pour chaque rafale, afin d'en permettre l'interpolation en 17.

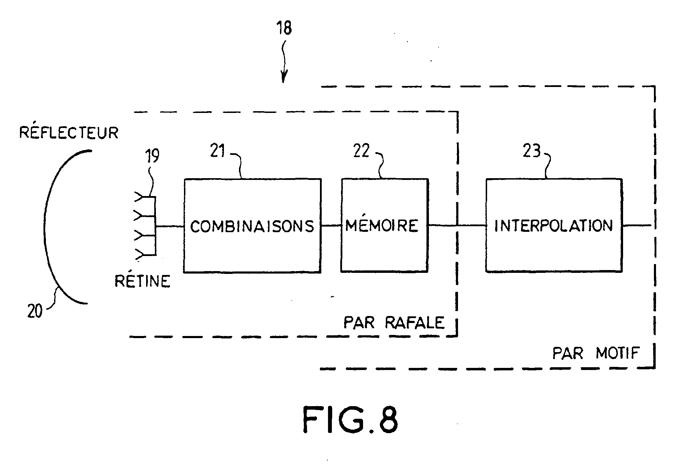

On a représenté en figure 8 le bloc-diagramme de la partie réception 18 d'un radar à antenne à structure focalisée. Cette antenne comporte, par exemple, une rétine de capteurs 19 placée au foyer d'une lentille ou d'un réflecteur 20. La rétine 19 est suivie d'un circuit combinatoire 21 pour former des faisceaux simultanés, éventuellement antibrouillés, pointés dans des directions déterminées (ce que l'on appelle en anglais : « stacked beams »). Le circuit 21 est suivi d'une mémoire 22 stockant des signaux complexes pour chaque rafale. La mémoire 22 est suivie d'un dispositif d'interpolation 23, relatif à un motif.

Dans les trois modes de réalisation décrits ci-dessus, les dispositifs d'interpolation mettent en oeuvre le procédé d'interpolation de l'invention, c'est-à-dire, en particulier, qu'ils effectuent des interpolations entre des nombres complexes, afin d'assurer la couverture angulaire souhaitée, et ce, à partir d'un maillage lacunaire effectif (à pas nettement supérieur à celui nécessaire pour assurer les performances de détection recherchées) dont il permet de combler les « trous » en y insérant des faisceaux interpolés, formant ainsi un maillage complet, régulier ou non (dans ce dernier cas, on peut avoir localement une plus grande densité de faisceaux, en particulier pour surveiller de façon plus « attentive » une zone d'intérêt où l'on soupçonne par exemple la présence d'un danger particulier) et pouvant évoluer dans le temps.

Il est à noter que le maillage lacunaire ne comporte pas nécessairement toujours les mêmes faisceaux effectivement formés, et que l'on peut faire occuper alternativement à ces faisceaux effectivement formés les places des faisceaux interpolés. Ainsi, pour l'exemple simplifié de la figure 3, les maillages correspondent alternativement aux faisceaux 1 effectivement formés, puis aux faisceaux interpolés d'indice de repérage 2, puis aux faisceaux interpolés d'indice de repérage 3, etc...

Le procédé de l'invention peut s'appliquer avantageusement à la localisation de sources de brouillage, qui nécessite un maillage fin du domaine angulaire potentiel de la menace.

## Revendications

1. Procédé d'augmentation de la couverture angulaire de radars à formation de faisceaux, **caractérisé en ce qu'**il consiste, à partir d'un maillage de faisceaux formés à pas grossier (maillage 1, fig. 3), couvrant tout l'espace désiré, à interpoler les faisceaux manquants (maillages 2 et 3, fig. 3) pour obtenir un maillage à pas suffisamment fin en fonction de la probabilité de détection de cibles souhaitée, l'interpolation étant opérée sur des nombres complexes représentatifs des paramètres des faisceaux.

2. Procédé selon la revendication 1, **caractérisé en ce que** les faisceaux effectivement formés et se trouvant sur les bords du maillage, l'interpolation est effectuée en leur adjoignant des faisceaux fictifs pour compléter les mailles incomplètes.

3. Procédé selon la revendication 1, **caractérisé en ce que** pour les faisceaux effectivement formés et se trouvant sur les bords du maillage, on modifie le calcul d'interpolation en fonction du nombre de faisceaux des mailles incomplètes.

4. Procédé selon l'une des revendications précédentes, **caractérisé en ce que** le nombre de faisceaux interpolés est variable dans le temps.

5. Procédé selon l'une des revendications précédentes, **caractérisé en ce que** la densité des faisceaux interpolés est variable suivant les zones de la couverture angulaire.

6. Procédé selon l'une des revendications précédentes, **caractérisé en ce qu'**il est associé à un traitement de post-intégration sur plusieurs rafales.

7. Procédé selon l'une des revendications précédentes, **caractérisé en ce que** l'on fait évoluer dans le temps les emplacements des faisceaux effectivement formés et des faisceaux interpolés.

8. Utilisation du procédé selon l'une quelconque des revendications 1 à 7, dans un radar à formation de faisceaux par le calcul (4) comportant plusieurs voies de réception (5.1 - 8.1 à 5.K - 8 K), l'interpolation des faisceaux formés étant réalisée après la formation des faisceaux par le calcul (9), et avant la post-intégration (11) et la détection (12).

9. Utilisation du procédé selon l'une quelconque des revendications 1 à 7, dans un radar à balayage électronique (13) comportant une antenne réseau (14), un dispositif de traitement des signaux reçus (15) et une mémoire (16), l'interpolation de signaux complexes (17) étant réalisée sur les signaux en aval de la mémoire.

10. Utilisation du procédé selon l'une quelconque des revendications 1 à 7, dans un radar à structure focalisée (18) comportant une rétine de capteurs (19) coopérant avec un réflecteur (20) et suivie d'un dispositif combinatoire (21) et d'une mémoire (22), l'interpolation de signaux complexes (23) étant réalisée sur les signaux en aval de la mémoire.

## Claims

1. Method of increasing the angular coverage of a beamforming radar, **characterized in that** it consists, using a grid of beams formed with a coarse pitch (grid 1, Figure 3), covering the entire desired space, in interpolating the missing beams (grids 2 and 3, Figure 3) in order to obtain a grid with a sufficiently fine pitch as a function of the target detection probability desired, the interpolation being carried out on complex numbers representative of the beam parameters.

2. Method according to Claim 1, **characterized in that**, for the beams actually formed and located on the edges of the grid, the interpolation is carried out by adjoining imaginary beams thereto, so as to complete the incomplete grids.

3. Method according to Claim 1, **characterized in that**, for the beams actually formed and located on the edges of the grid, the interpolation calculation is modified according to the number of beams of the incomplete grids.

4. Method according to one of the preceding claims, **characterized in that** the number of interpolated beams can vary over time.

5. Method according to one of the preceding claims, **characterized in that** the density of the interpolated beams can vary according to the angular coverage regions.

6. Method according to one of the preceding claims, **characterized in that** it is combined with processing consisting of post-integration over several bursts.

7. Method according to one of the preceding claims, **characterized in that** the positions of the beams actually formed and of the interpolated beams are varied over time.

8. Use of the method according to any one of Claims 1 to 7, in a beamforming radar by computation (4) comprising several receive channels (5.1 - 8.1 to 5.K - 8 K), the interpolation of the beams formed being carried out after beam formation by computation (9) and before post-integration (11) and detection (12).

9. Use of the method according to any one of Claims 1 to 7, in an electronically scanned radar (13) comprising an antenna array (14), a received-signal processing device (15) and a memory (16), the complex-signal interpolation (17) being performed on the signals downstream of the memory.

10. Use of the method according to any one of Claims 1 to 7, in a radar (18) with a focused structure comprising a "retina" of sensors (19), which cooperates with a reflector (20) and is followed by a combinational device (21) and by a memory (22), the complex-signal interpolation (23) being performed on the signals downstream of the memory.

## Patentansprüche

1. Verfahren zum Erhöhen des Erfassungswinkels von Radaren mit Strahlenbündelformation, **dadurch gekennzeichnet, dass** es darin besteht, ausgehend von einem Gitter von Strahlenbündeln, die mit grober Schrittweite gebildet sind (Gitter 1, Fig. 3), das den gesamten gewünschten Raum abdeckt, die fehlenden Strahlenbündel (Gitter 2 und 3, Fig. 3) zu interpolieren, um ein Gitter mit ausreichend feiner Schrittweite in Abhängigkeit von der Wahrscheinlichkeit der Erfassung gewünschter Ziele zu erhalten, wobei die Interpolation an komplexen Zahlen ausgeführt wird, die Parameter der Strahlenbündel repräsentieren.

2. Verfahren nach Anspruch 1, **dadurch gekennzeichnet, dass** für die tatsächlich gebildeten Strahlenbündel, die sich an den Rändern des Gitters befinden, die Interpolation **dadurch** ausgeführt wird, dass ihnen fiktive Strahlenbündel zugeordnet werden, um die unvollständigen Gitter zu vervollständigen.

3. Verfahren nach Anspruch 1, **dadurch gekennzeichnet, dass** für die tatsächlich gebildeten Strahlenbündel, die sich an den Rändern des Gitters befinden, die Interpolationsrechnung in Abhängigkeit von der Anzahl von Strahlenbündeln von unvollständigen Gittern modifiziert wird.

4. Verfahren nach einem der vorhergehenden Ansprüche, **dadurch gekennzeichnet, dass** die Anzahl interpolierter Strahlenbündel zeitlich veränderlich ist.

5. Verfahren nach einem der vorhergehenden Ansprüche, **dadurch gekennzeichnet, dass** die Dichte der interpolierten Strahlenbündel entsprechend den Zonen des Erfassungswinkels veränderlich ist.

6. Verfahren nach einem der vorhergehenden Ansprüche, **dadurch gekennzeichnet, dass** ihm eine Nachintegrationsverarbeitung an mehreren Stößen zugeordnet ist.

7. Verfahren nach einem der vorhergehenden Ansprüche, **dadurch gekennzeichnet, dass** die Orte der tatsächlich gebildeten Strahlenbündel und der interpolierten Strahlenbündel zeitlich entwickelt werden.

8. Verwendung des Verfahrens nach einem der Ansprüche 1 bis 7 in einem Radar mit Strahlenbündelformation durch die Berechnung (4), die mehrere Empfangswege (5.1 - 8.1 bis 5.K - 8.K) enthält, wobei die Interpolation der gebildeten Strahlenbündel nach der Formation der Strahlenbündel durch die Berechnung (9) und vor der Nachintegration (11) und der Erfassung (12) ausgeführt wird.

9. Verwendung des Verfahrens nach einem der Ansprüche 1 bis 7 in einem Radar mit elektronischer Strahlschwenkung (13), das eine Gruppenantenne (14), eine Vorrichtung (15) für die Verarbeitung empfangener Signale und einen Speicher (16) enthält, wobei die Interpolation komplexer Signale (17) an den Signalen am Ausgang des Speichers ausgeführt wird.

10. Verwendung des Verfahrens nach einem der Ansprüche 1 bis 7 in einem Radar mit fokussierter Struktur (18), das eine Retina von Sensoren (19) enthält, die mit einem Reflektor (20) zusammenwirken und denen eine kombinatorische Vorrichtung (21) und ein Speicher (22) folgen, wobei die Interpolation komplexer Signale (23) an den Signalen am Ausgang des Speichers ausgeführt wird.
